# EUROPÄISCHE PATENTSCHRIFT

(11) **EP 0 937 299 B1**
(45) Veröffentlichungstag und Bekanntmachung des Hinweises auf die Patenterteilung: **17.01.2001**
(21) Anmeldenummer: 97950100.4
(22) Anmeldetag: 05.11.1997
(51) Int. Cl.: G11B 23/40

(54) **ETIKETTENBOGEN**
LABEL SHEET
FEUILLE D'ETIQUETTES

(30) Priorität: 05.11.1996 DE 29619143 U
(43) Veröffentlichungstag der Anmeldung: 25.08.1999
(73) Patentinhaber: Claussnitzer, Werner, 42329 Wuppertal (DE)
(72) Erfinder: Claussnitzer, Werner, 42329 Wuppertal (DE)
(74) Vertreter: Müller, Enno, Dipl.-Ing.
(86) Internationale Anmeldenummer: EP9706108
(87) Internationale Veröffentlichungsnummer: WO9820493

(56) Entgegenhaltungen:
- EP-A- 0 070 031
- EP-A- 0 329 122
- EP-A- 0 628 956
- DE-U- 29 613 123
- US-A- 4 903 255
- US-A- 5 518 325

## Beschreibung

Die Erfindung betrifft einen Etikettenbogen, bspw. im DIN A4-Format mit Etiketten für ein Etikettieren von Compactdiscs (CD), wobei eine Compactdisc eine Leseseite und eine Rückseite aufweist und ein äußerer Durchmesser eines auslesbaren bzw. beschreibbaren Bereichs der Leseseite mit einem äußeren Durchmesser eines auf der Rückseite ausgebildeten Bereichs übereinstimmt und weiter auf dem Etikettenbogen mindestens zwei kreisringförmige Etiketten für ein Etikettieren der Compactdisc vorgesehen sind, welche Etiketten einen Innen- und einen Außendurchmesser aufweisen.

Insbesondere seit derartige, Compactdiscs in Verbindung mit Personal Computern als beschreibbare Datenträger Verwendung finden, besteht ein Bedarf, einzelne Compactdiscs auch individuell zu kennzeichnen. Hierzu sind bereits kreisringförmige Etiketten für eine individuelle Kennzeichnung von Compactdiscs bekannt geworden, bei welchen der Außendurchmesser praktisch genau dem äußeren Durchmesser des auslesbaren oder beschreibbaren Bereichs, bzw. des entsprechenden Bereichs auf der Rückseite der Compactdisc, entspricht. Gleichermaßen ist der Innendurchmesser dieser Etiketten an dem auslesbaren Bereich, bzw. an dem entsprechenden Bereich auf der Rückseite der Compactdisc orientiert, wobei er diesen radial nach innen etwas übertrifft.

Compactdiscs werden bekanntlich mit relativ hohen Drehgeschwindigkeiten in einer Compactdisc-Station gelesen bzw. beschrieben. Die Etikettierung von Compactdiscs ist daher mit großer Sorgfalt vorzunehmen, da Ungenauigkeiten zu einer Unwucht führen können, die das Auslesen bzw. Beschreiben der Compactdisc beeinträchtigt oder die sogar die Compactdisc-Station beschädigen kann.

Hinsichtlich der Etikettierung von Compactdiscs sind bereits verschiedene Vorrichtungen vorgeschlagen worden. So wird auf die PCT WO 96/ 03057 und die nicht vorveröffentlichte deutsche Patentanmeldung des Anmelders P 196 28 67 86 verwiesen.

Gleichwohl besteht ein Bedürfnis, die Kombination einer Compactdisc mit einem Etikett weiter zu verbessern und insbesondere hierfür geeignete Etiketten anzugeben.

Diese technische Problematik ist zunächst und im wesentlichen beim Gegenstand des Anspruches 1 gelöst, wobei darauf abgestellt ist, daß der Außendurchmesser einer Etikette kleiner ist als der äußere Durchmesser des dem auslesbaren Bereich auf der Rückseite entsprechenden Bereiches der Compactdisc, derart, daß ein deutlicher Überstand dieses Bereiches über dem Außendurchmesser der Etikette von etwa 2 mm verbleibt, und daß der Innendurchmesser der Etikette an einer auf der Rückseite der Compactdisc ausgebildeten Stufe orientiert ist, derart, daß er ein Durchmessermaß der Stufe nur um etwa 2 bis 4 mm radial auswärts übertrifft. Erfindungsgemäß ist erkannt worden, daß bei im wesentlichen gleicher bzw. nur unwesentlich verringerter insgesamt zu beschriftender Fläche der beschreibbare Bereich mehr auf das Zentrum zu gerückt werden kann. Da die näher am Zentrum liegenden Bereiche hinsichtlich einer möglichen Unwucht weniger bedeutend sind als die weiter außen liegenden, ist durch die vorgenommene Verschiebung des beschreibbaren Bereiches nach innen eine Verbesserung hinsichtlich der Unwuchtunempfindlichkeit erreicht. Zugleich ist ein markanter, in der Regel aufgrund einer Reflektionsschicht gold oder zumeist silbrig glänzender Randbereich der Compactdisc auch nach Etikettierung sichtbar erhalten geblieben und wird eine derart etikettierte Compactdisc leicht als solche auch erkannt. Der Etikettenbogen kann nicht nur im DIN A4-Format vorliegen, sondern bspw. auch in dem US-amerikanischen "lettersize". Hierbei kann die Schmalseite etwa eine Abmessung von 21,5 cm aufweisen und die Langseite eine solche von 27,2 cm. Bevorzugt ist vorgesehen, daß auf dem Etikettenbogen drei Etiketten insbesondere gleicher Größe für ein Etikettieren von Compactdiscs vorgestanzt sind. Hierbei ist daran gedacht, daß der Etikettenbogen zweilagig ausgebildet ist, mit einer tragenden Unterseite, auf welcher lösbar eine Etikettierfolie aufgebracht ist. In dieser Etikettierfolie sind die Etiketten dann ausgestanzt. Sind drei oder ggf. mehr Etiketten vorgesehen, wird weiter bevorzugt, daß die Mittelpunkte zweier Etiketten auf einer Geraden parallel zu einer Längskante des Etikettenbogens angeordnet sind und daß der Abstand der zwei Mittelpunkte die Grundseite eines gleichschenkligen Dreiecks ausbildet, dessen über der Grundseite liegende Spitze mit dem Mittelpunkt des dritten Etiketts zusammenfällt. Bevorzugt werden derartige Etiketten mittels eines computergesteuerten Drukkers bedruckt. Hierzu ist eine genaue Orientierung der Etiketten auf dem Etikettenbogen für ein exaktes Bedrukken notwendig. Durch die gegebene Anordnung befinden sich - beim Durchlaufen des Etikettenbogens in seiner Längserstreckung durch einen Drucker - Etiketten zunächst auf einer Linie hintereinander, die sich parallel zu einer Längskante des Etikettenbogens erstreckt. Hierdurch ist für diese beiden Etiketten eine gleichartige Druckkopfsteuerung quer zum Zeilenvorschub gegeben. Ein drittes Etikett ist durch die gegebene Anordnung mittig in Längserstreckung des Bogens zwischen den zwei Etiketten noch angeordnet, wobei durch die Anordnung der Mittelpunkte auf einem gleichschenkligen Dreieck in Längserstreckung ein äquidistanter Abstand der Mittelpunkte gegeben ist. Hierdurch ist auch der Vorlauf des Druckers vereinfacht und ist bei gleichartigem Zeilenvorschub lediglich die Positionierung des Druckkopfes seitlich zu versetzen. Bei den interessierenden Abmessungen der Etiketten wird für eine optimale Ausnutzung eines DIN A4-Bogens eine Ausgestaltung vorgesehen, bei der die Mittelpunkte der drei Etiketten an den Spitzen eines rechtwinkligen Dreiecks angeordnet sind. Auch hierbei ist insbesondere daran gedacht, daß die Mittelpunkte zweier Etiketten auf einer zu einer Längskante des Etikettenbogens verlaufenden Geraden angeordnet sind, so daß der rechte Winkel von den Verbindungslinien dieser beiden Mittelpunkte auf der Geraden zu dem Mittelpunkt der dritten Etikette aufgespannt wird. Weiter von Vorteil ist eine symmetrische Ausbildung des Etikettenbogens, wobei die Etiketten symmetrisch zu einer Mittel-Symmetrieachse des Bogens angeordnet sind, insbesondere bei drei Etiketten symmetrisch zu der kurzen, quer zur Längserstreckung verlaufenden Mittellinie des Etikettenbogens. Dies hat den Vorteil, daß bei einer Druckersteuerung bei unterschiedlichem Einlegen eines Bogens mit drei Etiketten in der beschriebenen Anordnung lediglich ein Koordinatentausch für die Druckkopfsteuerung quer zum Zeilenvorschub erfolgen muß. Ist bei einer Anordnung von zwei Etiketten auf einem Etikettenbogen Symmetrie vorgesehen, so kann auch eine Symmetrie zur Längs-Mittel-Symmetrieachse des Bogens zusätzlich oder alternativ noch vorgesehen sein. Ist zweifache Symmetrie vorgesehen, werden die Etiketten unabhängig von dem Einlegen des Bogens in einen Drucker immer richtig bedruckt. Für eine leichte Handhabbarkeit der Etiketten ist weiter vorgesehen, daß eine an dem Innendurchmesser der Etikette orientierte Kontur der Etikette an einer Stelle einen radial nach außen weisenden, zungenförmigen Abschnitt aufweist. Für ein Abziehen des kreisringförmigen Etiketts braucht dann lediglich der Etikettenbogen in seiner Erstreckungsebene gebogen werden, wobei die in die Etikette hineinragende, durch den Abschnitt ausgebildete Zunge des zu entfernenden Innenteils gefaßt und dieses Innenteil entfernt werden kann. Im weiteren kann dann im Bereich dieser Stelle auch das Etikett selbst leicht von seiner tragenden Unterlage entfernt werden. Die Anordnung einer solchen Greifzunge bzw. zungenförmigen Ausnehmung im Bereich des Innendurchmessers hat weiter den Vorteil, daß die so ausgebildete zungenförmige Ausnehmung in der Etikette sich im Hinblick auf mögliche Unwuchten nur geringfügig auswirkt. Dem trägt weiter Rechnung, daß der zungenförmige Abschnitt etwa eine Größe von 10 bis 12 mm² umfaßt, bei einer bevorzugten Tiefe gegenüber dem Innendurchmesser, d. h. bei einer radialen Abmessung von weniger als 4 mm. Eine weitere Maßnahme sieht wenigstens eine rauhe Oberfläche, insbesondere die der Rückseite des Etikettenbogens noch vor. Infolge dieser Maßnahme ist ein guter Reibschluß zwischen den Transportwalzen eines Druckers und damit ein genauer und sicherer Zeilenvorschub für ein Bedrucken der Etiketten gegeben. Ist auch die Oberfläche der Etikette selbst, bspw. eine selbstklebende Folie, rauh, so kann diese auch leicht mit üblichen Stiften von Hand beschriftet werden. In weiterer Ausgestaltung ist ein kleinster Abstand zwischen zwei Stanzabschnitten zweier Etiketten entlang deren jeweiligen Außendurchmesser etwa bei 3 bis 6 mm, bevorzugt etwa bei 4 bis 5 mm vorgesehen. Bei einer derartigen Wahl der Abstände, insbesondere auf den Verbindungslinien der Mittelpunkte zweier in Längserstreckung des Bogens nebeneinander versetzter Etiketten ist hierdurch ein Maß vorgegeben, welches ein sicheres Herauslösen der Etiketten selbst erlaubt. Andererseits verhaften die zwischen den Stanzschnitten verbleibenden Stege sicher mit ihrer tragenden Unterlage und verbleiben hierdurch weitere Etiketten von dem Herauslösen einer einzelnen unberührt. Bei einer üblichen Compactdisc von ca. 12 cm Durchmesser, wie sie als CD-ROM Verwendung findet, wird dann ein Innendurchmesser des Etiketts von 3,7 mm und ein Außendurchmesser von 11,3 mm letztlich bevorzugt. Insbesondere für eine solche Compactdisc mit einer Leseseite, die einen kreisringförmigen Lesebereich aufweist, und mit einer mit einer kreisringförmigen Etikette versehenen Rückseite ergibt sich dann, daß der Außendurchmesser der Etikette wenigstens 2 mm kleiner ist als der äußere Durchmesser des dem auslesbaren Bereich auf der Rückseite entsprechenden Bereichs und daß der Innendurchmesser der Etikette den Durchmesser einer auf der Rückseite ausgebildeten Stufe nur um etwa 2 bis 4 mm radial auswärts übertrifft.

Die Erfindung wird anhand der Zeichnung näher erläutert, in der lediglich ein Ausführungsbeispiel dargestellt ist.
- Fig. 1: zeigt in Draufsicht einen Etikettenbogen mit der Anordnung von drei Etiketten,
- Fig. 2: zeigt einen Schnitt durch eine etikettierte Compactdisc,
- Fig. 3: eine Draufsicht auf eine etikettierte Compactdisc entsprechend dem Pfeil III in Fig. 1 und
- Fig. 4: eine weitere Ausführungsform eines Etikettenbogens, mit Abmessungen im "letter-size".

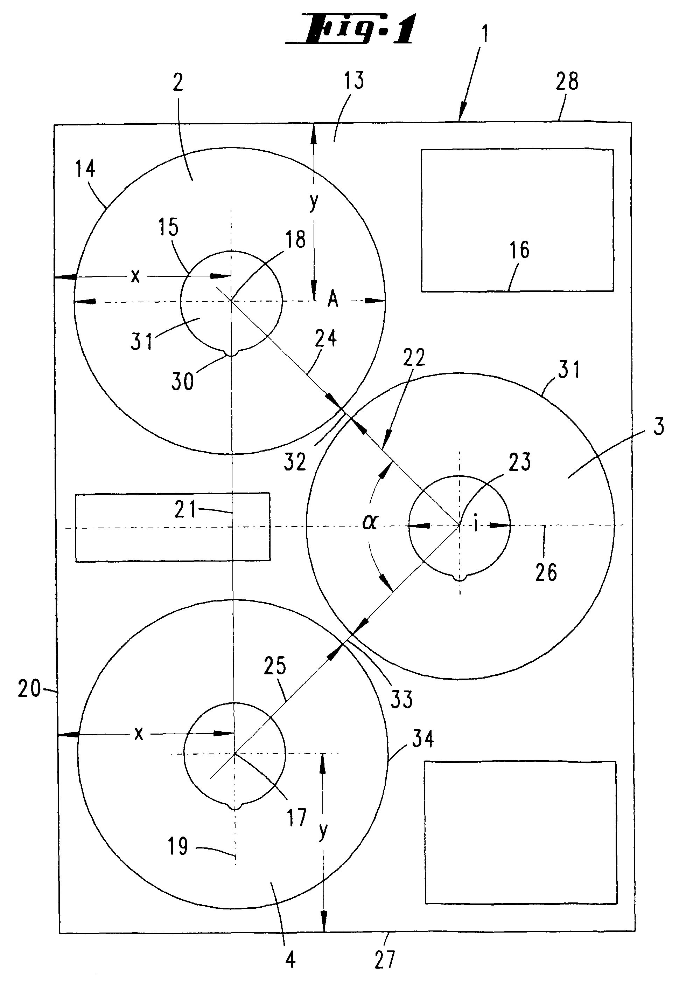

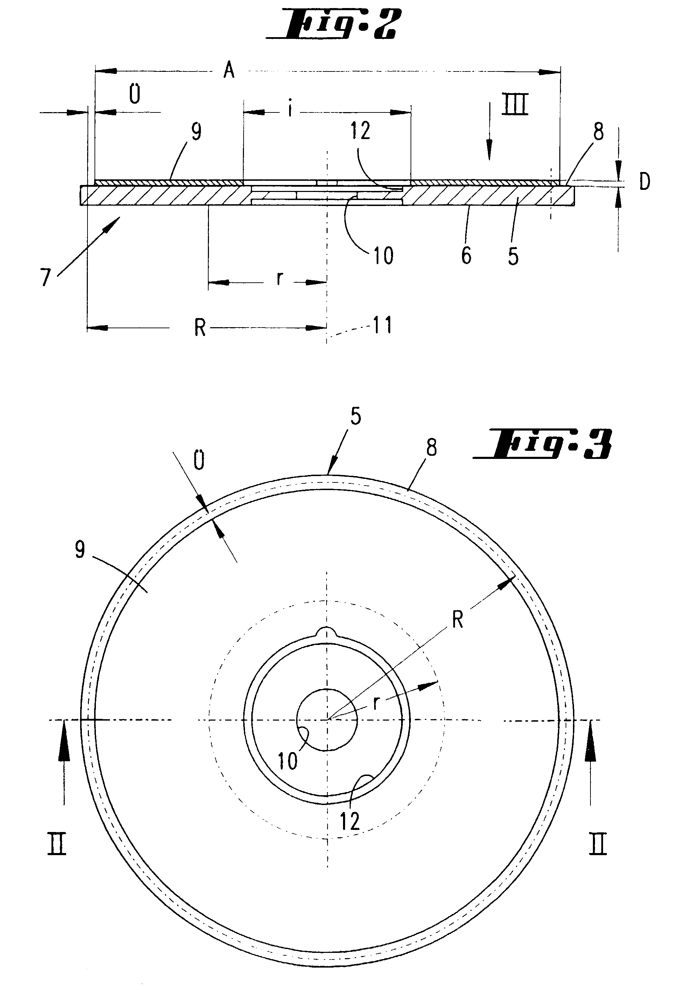

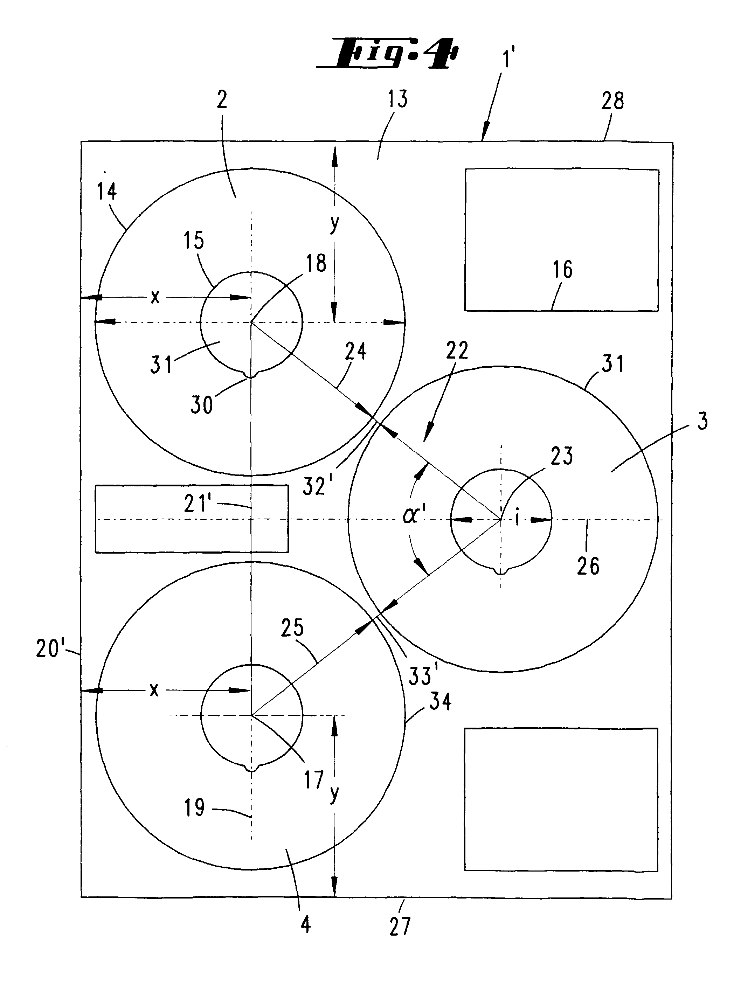

Fig. 1 zeigt einen maßstabsgetreu verkleinerten Etikettenbogen 1 im DIN A4-Format mit kreisringförmigen Etiketten 2, 3, 4 für ein Etikettieren von Compactdiscs 5 entsprechend den Fig. 2 und 3. Die in Rede stehende Compactdisc 5 weist eine Leseseite 6 auf, die zwischen einem inneren Durchmesser r bis zu einem äußeren Durchmesser R sich erstreckenden Bereich 7 auslesbar bzw. beschreibbar ist. Die der Leseseite 6 gegenüberliegende Rückseite 8 ist hierzu regelmäßig nicht vorgesehen, sondern für einen Informationsaufdruck bspw. bei Musik-Compactdiscs bzw. für eine Etikettierung bei bspw. beschreibbaren CD-ROMS. Letztere besitzen zumeist silbrig glänzend Lese- 6 bzw. Rückseiten 8, die durch eine mittlere, bspw. aus Aluminium bestehende Reflektionsschicht hervorgerufen werden.

Sind in den Fig. 2 und 3 die radialen Abmessungen etwa original, so ist im Schnitt gemäß Fig. 2 die Dicke aus Darstellungsgründen erheblich überhöht, bspw. die Dicke D eines auf die Compactdisc 5 aufgeklebten Etiketts 9, welches bspw. aus einer selbstklebenden Folie von nur einigen 10 µm Dicke bestehen kann. Gelesen bzw. beschriftet werden die in Rede stehenden Compactdiscs 5 in weiter nicht dargestellten Stationen, in welchen sie auf eine zentrale Durchbrechung 10 durchsetzenden Dorn aufgesetzt um eine Rotationsachse 11 mit hoher Geschwindigkeit drehen.

Die aus der hohen Drehgeschwindigkeit resultierenden, eingangs geschilderten Probleme, bspw. einer Unwucht, werden erfindungsgemäß durch kreisringförmige Etiketten vermieden, deren Außendurchmesser A kleiner ist als der äußere Durchmesser R des auslesbaren Bereichs 7, projiziert auf die Rückseite. Dieser Überstand Ü über dem Außendurchmesser A der Etikette beträgt dabei wenigstens 2 mm. Weiter ist der Innendurchmesser i der Etikette 2, 3, 4, 9 an einer auf der Rückseite 8 der Compactdisc 5 ausgebildete Stufe 12 derart orientiert, daß der Innendurchmesser i ein Durchmessermaß der Stufe 12 nur um etwa 2 bis 4 mm, hier insbesondere 2 mm radial auswärts übertrifft.

Die drei Etiketten 2, 3, 4 des Etikettenbogens 1 gemäß Fig. 1 sind insbesondere aus einem selbstklebenden Etikettenmaterial 13, das in an sich bekannter Art lösbar auf einen Träger aufgeklebt ist, ausgestanzt. Konturlinien 14 bis 16 stellen demnach neben der Begrenzung einer Etikette auch einen Stanzschnitt dar.

Fig. 1 zeigt weiter, daß die Mittelpunkte 17, 18 der Etikette 2, 4 auf einer Geraden 19 parallel zu einer Längskante 20 des Etikettenbogens 1 angeordnet sind. Der Abstand 21 der Mittelpunkte 17, 18 bildet die Grundseite eines gleichschenkligen Dreiecks 22, hier in vergleichsweise dünnen Linien eingezeichnet, dessen über der Grundseite bzw. dem Abstand 21 liegende Spitze mit dem Mittelpunkt 23 der dritten Etikette 3 zusammenfällt. Die beiden gleichlangen Schenkel des Dreiecks 22, nämlich die Abstände 24, 25 der Mittelpunkte 18, 23 bzw. 17, 23 spannen hier einen Winkel Alpha von 90° auf. Infolge sind die Mittelpunkte 17, 18, 23 der drei Etiketten 2, 3, 4 an den Spitzen eines rechtwinkligen Dreiecks 22 angeordnet.

Da der gezeigte Etikettenbogen 1 im DIN A4-Format in der Regel in seiner Längserstreckung für ein Beschriften der Etiketten bspw. einen Drucker durchläuft, ist es zweckmäßig insbesondere die kreisringförmigen Etiketten 2, 3, 4 für das Etikettieren von Compactdiscs 5 symmetrisch zu einer Mittel-Symmetrieachse, hier der kürzeren Quer-Symmetrieachse 26, auszubilden. Hierdurch ergibt sich bei dem Ausführungsbeispiel nach Fig. 1 in Längserstreckung, unabhängig von der Richtung, eine jeweilige Gleichbeabstandung der Mittelpunkte 17, 18 zu den entsprechenden Querrändern 27, 28 des Bogens 1 bzw. liegt der Mittelpunkt 23 unmittelbar auf der Symmetrieachse 26.

Alternativ kann bei einer Anordnung bspw. mit nur zwei kreisringförmigen Etiketten die Mittelpunkte dieser Etiketten auf einer Längs-Symmetrieachse des Bogens angeordnet sein und darüber hinaus zusätzlich oder alternativ symmetrisch zu der Quer-Symmtrieachse.

Der Stanzschnitt oder die Kontur 15 der Etikette 2, welche sich an dem Innendurchmesser i dieser wie auch der übrigen Etiketten 3, 4, 9 orientiert, weist an einer Stelle jeweils einen radial nach außen weisenden, zungenförmigen Abschnitt 30 auf. Dessen Fläche beträgt etwa 10 bis 12 mm², wobei die radiale Abmessung 4 mm oder wie hier weniger, nämlich etwa 2 mm nur beträgt. Durch diese geringen Abmessungen und die Lage hin zur Rotationsachse 11 wird durch diese "Störung" kaum eine Unwucht oder dergleichen erzeugt. Andererseits sind die Abmessungen ausreichend, daß bei einem Biegen des Etikettenbogens 1 die Stanzung entlang der Kontur 15 aufbricht und das Etikett 2 oder auch zunächst der zentrale Bereich 31 an der durch den zungenförmigen Abschnitt 30 ausgebildeten Zunge selbst gefaßt werden kann.

Zwischen zwei Stanzschnitten 14, 31' der Etiketten 2, 3 entlang deren jeweiligen Außendurchmesser ist ein Abstand 32 von etwa 3 bis 6 mm, hier zwischen 4 und 5 mm vorgesehen. Aufgrund der symmetrischen Anordnung ergibt sich ein gleicher Abstand 33 zwischen dem Stanzabschnitt 31' der Etikette 3 und dem Stanzschnitt 34 der Etikette 4.

Bei einem Durchmesser der Compactdisc 5 von ca. 12 cm werden als konkrete Abmessungen ein Innendurchmesser i von 3,7 cm und ein Außendurchmesser A von 11,3 cm bei den Etiketten 2, 3, 4 und 9 gewählt, wobei die Durchmesser auch durchaus kleiner gewählt sein können.

In der Zeichnung nicht dargestellt ist, daß die beiden Oberflächen, nämlich die Rückseite und die Beschriftungsseite des Etikettenbogens aufgerauht sein können. Wie eingangs erläutert, wird hierdurch das Beschriften bzw. der Transport des Bogens 1 durch Transportwalzen bspw. eines Druckers noch erleichtert.

In weiterer Erläuterung des Etikettenbogens von Fig. 1 ist noch darauf hinzuweisen, daß ein Abstand der Mittelpunkte 17 zu einer Längskante 20 (x) bzw. einem Querrand 27 (y) bzgl. der entlang der Längskante 20 übereinander angeordneten beiden Etiketten jeweils gleich ist. Der Abstand y ist größer als der Abstand x. Beim Ausführungsbeispiel der Fig. 1 ist x etwa um den Abstand 32, konkret um ca. 5,5 mm, größer als das Maß des Abstandes 24 (die Hälfte des Maßes A). Das Maß y ist etwa um das Zweifache des Maßes 32 größer als das Maß 24. Beim Ausführungsbeispiel um etwa 10 mm.

Das Ausführungsbeispiel der Fig. 4 zeigt einen weiteren Etikettenbogen 1', dessen Längskante 20' etwa eine Länge von 27,2 cm aufweist und dessen Querkante 27' etwa eine Länge von 21,5 cm aufweist.

Die Etiketten 2, 3 und 4 sind, einschließlich der zentralen Bereiche 31 identisch ausgebildet entsprechend dem Etikettenbogen der Fig. 1. Auf die dortige Beschreibung wird insoweit Bezug genommen.

Insbesondere weisen die Etiketten 2, 3 und 4 gemäß Fig. 4 in gleicher Weise eine zungenförmige Ausnehmung 30 auf. Bezüglich beider Ausführungsformen ist auch von Bedeutung, daß die zungenförmigen Ausnehmungen 30 auf dem Etikettenbogen jeweils nach unten, der Querkante 27 bzw. 27' zuweisend, angeordnet sind. Im einzelnen sind die Ausnehmungen 30 aus so ausgebildet, daß ihre Symmetriemittellinie mit der die beiden Mittelpunkte der Etiketten 2 und 4 verbindenden Linie (vgl. Abstandslinie 21 bzw. 21') zusammenfällt. Entsprechend - zeichnerisch der Übersichtlichkeit halber nicht dargestellte - Symmetrielinie der zungenförmigen Ausnehmung 30 des Etikettes 3 ist parallel zu der Abstandslinie 21 bzw. 21' ausgerichtet.

Bei der Ausführungsform der Fig. 4 ist wesentlich, daß ein Öffnungswinkel zwischen den Verbindungslinien der Mittelpunkte der Etiketten 2 und 4 jeweils mit dem Etikett 3 kleiner ist als 90°. Beim Ausführungsbeispiel ist der Öffnungswinkel Alpha' ca. 76°. Hierdurch eine kompaktere Anordnung der Etiketten auf dem Etikettenbogen erreicht im Vergleich zu der Ausführungsform der Fig. 1.

Das Maß 32' bzw. 33' ist bei der Ausführungsform der Fig. 4 gegenüber der Ausführungsform der Fig. 1 verkleinert. Bei der Ausführungsform der Fig. 4 ist das Maß 32' bzw. 33' jeweils größenordnungsmäßig entsprechend dem Längenmaß der zungenförmigen Ausnehmung 30. Konkret ist das Maß 32' bzw. 33' 3 mm.

Dagegen ist das Maß 32 bzw. 33 bei der Ausführungsform der Fig. 1 etwa doppelt so groß wie die radiale Abmessung der zungenförmigen Ausnehmung 30.

Die Maße x und y sind dagegen bei beiden Ausführungsformen gleich.

## Patentansprüche

1. Etikettenbogen, bspw. im DIN A4-Format, mit Etiketten für ein Etikettieren von Compactdiscs (CD), wobei eine Compactdisc eine Leseseite und eine Rückseite aufweist und ein äußerer Durchmesser eines auslesbaren bzw. beschreibbaren Bereiches der Leseseite mit einem äußeren Durchmesser eines auf der Rückseite ausgebildeten Bereichs übereinstimmt, und weiter auf dem Etikettenbogen mindestens zwei kreisringförmige Etiketten für ein Etikettieren der Compactdisc vorgesehen sind, welche Etiketten einen Innen- und einen Außendurchmesser aufweisen, dadurch gekennzeichnet, daß der Außendurchmesser (A) einer Etikette (9) kleiner ist als der äußere Durchmesser (2R) des dem auslesbaren Bereich (7) auf der Rückseite (8) entsprechenden Bereiches der Compactdisc (5), derart, daß ein deutlicher Überstand (Ü) dieses Bereiches über dem Außendurchmesser (A) der Etikette (9) von etwa 2 mm verbleibt, und daß der Innendurchmesser (i) der Etikette (9) an einer auf der Rückseite (8) der Compactdisc (5) ausgebildeten Stufe (12) orientiert ist, derart, daß er ein Durchmessermaß der Stufe (12) nur um etwa 2 bis 4 mm radial auswärts übertrifft.

2. Etikettenbogen nach Anspruch 1 oder insbesondere danach, dadurch gekennzeichnet, daß auf dem Etikettenbogen (1) drei Etiketten (2, 3, 4) insbesondere gleicher Größe für ein Etikettieren von Compactdiscs vorgestanzt sind.

3. Etikettenbogen nach einem oder mehreren der vorhergehenden Ansprüche oder insbesondere danach, dadurch gekennzeichnet, daß die Mittelpunkte (17, 18) zweier Etiketten (2, 4) auf einer Geraden (19) parallel zu einer Längskante (20) des Etikettenbogens (1) angeordnet sind und daß der Abstand (21) der zwei Mittelpunkte (17, 18) die Grundseite eines gleichschenkligen Dreiecks (22) ausbildet, dessen über der Grundseite liegende Spitze mit dem Mittelpunkt (23) der dritten Etikette (3) zusammenfällt.

4. Etikettenbogen nach einem oder mehreren der vorhergehenden Ansprüche oder insbesondere danach, dadurch gekennzeichnet, daß die Mittelpunkte (17, 18, 23) der drei Etiketten (2, 3, 4) an den Spitzen eines rechtwinkligen Dreiecks (22) angeordnet sind.

5. Etikettenbogen nach einem oder mehreren der vorhergehenden Ansprüche oder insbesondere danach, dadurch gekennzeichnet, daß die Etiketten (2, 3, 4) symmetrisch zu einer Mittel-Symmetrieachse (26) des Bogens (1) angeordnet sind.

6. Etikettenbogen nach einem oder mehreren der vorhergehenden Ansprüche oder insbesondere danach, dadurch gekennzeichnet, daß eine an dem Innendurchmesser (i) der Etikette (2) orientierte Kontur (14) der Etikette (2) an einer Stelle einen radial nach außen weisenden, zungenförmigen Abschnitt (30) aufweist.

7. Etikettenbogen nach einem oder mehreren der vorhergehenden Ansprüche oder insbesondere danach, dadurch gekennzeichnet, daß der zungenförmige Abschnitt (30) etwa eine Fläche von 10 bis 12 mm² umfaßt.

8. Etikettenbogen nach einem oder mehreren der vorhergehenden Ansprüche oder insbesondere danach, dadurch gekennzeichnet, daß die radiale Abmessung des zungenförmigen Abschnitts (30) 4 mm oder weniger beträgt.

9. Etikettenbogen nach einem oder mehreren der vorhergehenden Ansprüche oder insbesondere danach, dadurch gekennzeichnet, daß ein kleinster Abstand (32) zwischen zwei Stanzschnitten (14, 31') zweier Etiketten (2, 3) entlang deren jeweiligem Außendurchmesser (A) etwa bei 3 bis 6 mm, bevorzugt etwa bei 4 bis 5 mm liegt.

10. Etikettenbogen nach einem oder mehreren der vorhergehenden Ansprüche oder insbesondere danach, dadurch gekennzeichnet, daß eine rauhe Oberfläche des Etikettenbogens (1) vorgesehen ist.

11. Etikettenbogen nach einem oder mehreren der vorhergehenden Ansprüche oder insbesondere danach, dadurch gekennzeichnet, daß bei einer Etikette (3) der Innendurchmesser (i) 3,7 cm oder weniger und der Außendurchmesser (A) 11,3 cm oder weniger beträgt, bei einem Durchmesser der zu etikettierenden Compactdisc (5) von 12 cm.

12. Compactdisc mit einer Leseseite, die einen kreisringförmigen Lesebereich aufweist, und mit einer mit einer kreisringförmigen Etikette versehenen Rückseite, dadurch gekennzeichnet, daß der Außendurchmesser (A) der Etikette (9) wenigstens 2 mm kleiner ist als der äußere Durchmesser des dem auslesbaren Bereich (7) auf der Rückseite (8) entsprechenden Bereiches und daß der Innendurchmesser (i) der Etikette (9) den Durchmesser einer auf der Rückseite (8) ausgebildeten Stufe (12) nur um etwa 2 bis 4 mm radial auswärts übertrifft.

## Claims

1. Label sheet, for example in DIN A4 format, with labels for labelling compact discs (CDs), it being the case that a compact disc has a read side and a rear side, and an external diameter of a readable and/or writeable region of the read side coincides with an external diameter of a region formed on the rear side, and furthermore that there are provided on the label sheet at least two annular labels for labelling the compact disc, said labels having an internal diameter and an external diameter, characterized in that the external diameter (A) of a label (9) is smaller than the external diameter (2R) of that region of the compact disc (5) which corresponds to the readable region (7) on the rear side (8), such that a clear projection (Ü) of this region beyond the external diameter (A) of the label (9) of approximately 2 mm remains, and in that the internal diameter (i) of the label (9) is adapted to a step (12) formed on the rear side (8) of the compact disc (5), such that said internal diameter exceeds a diameter dimension of the step (12) in the radially outward direction merely by approximately 2 to 4 mm.

2. Label sheet according to Claim 1, or in particular according thereto, characterized in that three labels (2, 3, 4), in particular of the same size, for labelling compact discs are pre-punched on the label sheet (1).

3. Label sheet according to one or more of the preceding claims, or in particular according thereto, characterized in that the centre points (17, 18) of two labels (2, 4) are arranged on a straight line (19) parallel to a longitudinal edge (20) of the label sheet (1), and in that the distance (21) between the two centre points (17, 18) forms the base side of an isosceles triangle (22), of which the vertex which is located over the base side coincides with the centre point (23) of the third label (3).

4. Label sheet according to one or more of the preceding claims, or in particular according thereto, characterized in that the centre points (17, 18, 23) of the three labels (2, 3, 4) are arranged at the vertices of a right-angled triangle (22).

5. Label sheet according to one or more of the preceding claims, or in particular according thereto, characterized in that the labels (2, 3, 4) are arranged symmetrically with respect to a centre axis of symmetry (26) of the sheet (1).

6. Label sheet according to one or more of the preceding claims, or in particular according thereto, characterized in that a contour (14) of the label (2), said contour being adapted to the internal diameter (i) of the label (2), has, at one location, a radially outwardly oriented, tongue-shaped section (30).

7. Label sheet according to one or more of the preceding claims, or in particular according thereto, characterized in that the tonque-shaped section (30) has a surface area of approximately 10 to 12 mm².

8. Label sheet according to one or more of the preceding claims, or in particular according thereto, characterized in that the radial dimension of the tongue-shaped section (30) is 4 mm or less.

9. Label sheet according to one or more of the preceding claims, or in particular according thereto, characterized in that an extremely small distance (32) of approximately 3 to 6 mm, preferably approximately 4 to 5 mm, exists between two punch cuts (14, 31') of two labels (2, 3) along their respective external diameters (A).

10. Label sheet according to one or more of the preceding claims, or in particular according thereto, characterized in that a rough surface of the label sheet (1) is provided.

11. Label sheet according to one or more of the preceding claims, or in particular according thereto, characterized in that, in the case of a label (3), the internal diameter (i) is 3.7 cm or less and the external diameter (A) is 11.3 cm or less, the compact disc (5) which is to be labelled having a diameter of 12 cm.

12. Compact disc with a read side, which has an annular read region, and with a rear side, which is provided with an annular label, characterized in that the external diameter (A) of the label (9) is at least 2 mm smaller than the external diameter of the region which corresponds to the readable region (7) on the rear side (8), and in that the internal diameter (i) of the label (9) exceeds the diameter of a step (12), which is formed on the rear side (8), in the radially outward direction merely by approximately 2 to 4 mm.

## Revendications

1. Feuille d'étiquettes, par exemple au format DIN A4, avec des étiquettes pour l'étiquetage de disques compacts (CD), le disque compact présentant une face de lecture et une face arrière ainsi qu'un diamètre extérieur d'une zone de la face de lecture, apte à être lue ou à recevoir une écriture et qui correspond au diamètre extérieur d'une zone formée sur la face arrière, et dans laquelle feuille d'étiquettes sont en outre prévues deux étiquettes de forme annulaire circulaire pour l'étiquetage du compact disque, ces étiquettes présentant un diamètre intérieur et un diamètre extérieur, caractérisée en ce que le diamètre extérieur (A) d'une étiquette (9) est inférieur au diamètre extérieur (2R) de la zone du disque compact (5) correspondant à la zone de lecture (7) sur la face arrière (8), de telle façon qu'il reste un dépassement net (Ü) d'environ 2 mm de cette zone par rapport au diamètre extérieur (A) de l'étiquette (9), et que le diamètre intérieur (i) de l'étiquette (9) soit orienté par rapport à un gradin (12) réalisé sur la face arrière (8) du disque compact (5), de telle sorte que la dimension de ce diamètre ne dépasse dans le sens radial vers l'extérieur que d'environ 2 à 4 mm par rapport au gradin (12).

2. Feuille d'étiquettes selon ou en particulier selon la revendication 1, caractérisée en ce que sur la feuille d'étiquettes (1) sont prédécoupées trois étiquettes (2, 3, 4), en particulier de même taille pour l'étiquetage de disques compacts.

3. Feuille d'étiquettes selon ou en particulier selon l'une ou plusieurs des revendications précédentes, caractérisée en ce que les points centraux (17, 18) de deux étiquettes (2, 4) sont disposés sur une droite (19) parallèle au bord long (20) de la feuille d'étiquette et en ce que la distance (21) qui sépare les deux points centraux (17, 18) forme le côté de base d'un triangle isocèle (22), dont la pointe située au-dessus du côté de base coïncide avec le point central (23) de la troisième étiquette (3).

4. Feuille d'étiquettes selon ou en particulier selon l'une ou plusieurs des revendications précédentes, caractérisé en ce que les points centraux (17, 18, 23) des trois étiquettes (2, 3, 4) sont disposés sur les pointes d'un triangle rectangle (22).

5. Feuille d'étiquettes selon ou en particulier selon l'une ou plusieurs des revendications précédentes, caractérisée en ce que les étiquettes (2, 3, 4) sont disposées symétriquement par rapport à un axe médian et de symétrie (26) de la feuille (1).

6. Feuille d'étiquettes selon ou en particulier selon l'une ou plusieurs des revendications précédentes, caractérisée en ce que le contour (15) de l'étiquette (2) orienté sur le diamètre intérieur (i) comporte en un emplacement une découpe (30) en forme de languette et orientée radialement vers l'extérieur.

7. Feuille d'étiquettes selon ou en particulier selon l'une ou plusieurs des revendications précédentes, caractérisée en ce que la découpe (30) en forme de languette présente une surface d'environ 10 à 12 mm².

8. Feuille d'étiquettes selon ou en particulier selon l'une ou plusieurs des revendications précédentes, caractérisée en ce que la dimension radiale de la découpe (30) en forme de languette atteint 4 mm ou moins.

9. Feuille d'étiquettes selon ou en particulier selon l'une ou plusieurs des revendications précédentes, caractérisée en ce que la distance minimale (32) entre deux découpes de poinçonnement (14, 31') de deux étiquettes (2, 3), le long de leurs diamètres extérieurs correspondants (A), est compris entre environ 3 à 6 mm, de préférence entre environ 4 à 5 mm.

10. Feuille d'étiquettes selon ou en particulier selon l'une ou plusieurs des revendications précédentes, caractérisée en ce que la feuille d'étiquettes (1) présente une surface rugueuse.

11. Feuille d'étiquettes selon ou en particulier selon l'une ou plusieurs des revendications précédentes, caractérisée en ce que pour une étiquette (3), le diamètre intérieur (i) atteint 3,7 cm ou moins et le diamètre extérieur (A) atteint 11,3 cm ou moins, pour un diamètre du compact disque (5) à étiqueter de 12 cm.

12. Disque compact présentant une face de lecture qui comporte une zone de lecture de forme annulaire circulaire, et une face arrière munie d'une étiquette de forme annulaire circulaire, caractérisé en ce que le diamètre extérieur (A) de l'étiquette (9) est inférieur d'au moins 2 mm au diamètre extérieur de la zone sur la face arrière (8) correspondant à la zone (7) apte à être lue, et en ce que le diamètre intérieur (i) de l'étiquette (9) se trouve en retrait de seulement environ 2 à 4 mm, radialement vers l'extérieur par rapport à un gradin (12) réalisé sur la face arrière (8).
